(19) Europäisches Patentamt
European Patent Office
Office européen des brevets

(11) Veröffentlichungsnummer: **0 069 067**
**B1**

(12) # EUROPÄISCHE PATENTSCHRIFT

(45) Veröffentlichungstag der Patentschrift: **20.03.85**

(51) Int. Cl.⁴: **C 08 G 69/26**

(21) Anmeldenummer: **82810256.6**

(22) Anmeldetag: **14.06.82**

(54) **Transparente Polyamide, Verfahren zu deren Herstellung und deren Verwendung zur Herstellung von Formkörpern.**

(30) Priorität: **19.06.81 GB 8119012**

(43) Veröffentlichungstag der Anmeldung: **05.01.83 Patentblatt 83/1**

(45) Bekanntmachung des Hinweises auf die Patenterteilung: **20.03.85 Patentblatt 85/12**

(84) Benannte Vertragsstaaten: **CH DE FR GB IT LI NL**

(56) Entgegenhaltungen:
**US - A - 3 776 890**
**US - A - 4 024 185**
**US - A - 4 130 579**

(73) Patentinhaber: **CIBA-GEIGY AG, Postfach, CH-4002 Basel (CH)**

(72) Erfinder: **Pfeifer, Josef, Dr., Brunnmattstrasse 32, CH-4106 Therwil (CH)**

**EP 0 069 067 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft neue transparente Polyamide, Verfahren zu deren Herstellung sowie deren Verwendung zur Herstellung von Formkörpern.

In den US-PS 3 776 890 und 4 024 185 sind Polyamide aus 2-(4-Aminocyclohexyl)-1,1-dimethyläthylamin oder 2-(4-Aminophenyl)-1,1-dimethyläthylamin und aliphatischen, aromatischen oder aliphatisch-aromatischen Dicarbonsäuren oder amidbildenden Derivaten davon beschrieben. Diese Polyamide sind zum Teil kristallin. Sie absorbieren beträchtliche Mengen Wasser und sind in bezug auf Hydrolysebeständigkeit und/oder Dimensionsstabilität unter dem Einfluss von Feuchtigkeit nicht voll zufriedenstellend, wodurch auch deren mechanische und elektrische Eigenschaften beeinträchtigt werden. Zudem sind die Glasumwandlungstemperaturen dieser Polyamide stark feuchtigkeitsabhängig, und Polyamide aus den oben genannten Diaminen und aromatischen Dicarbonsäuren oder amidbildenden Derivaten davon lassen sich nicht aus der Schmelze verarbeiten [vgl. auch Journal of Polymer Science: Polymer Chemistry Edition, Bd. 16, 2025-2038 (1978)].

Die vorliegende Erfindung betrifft neue transparente Polyamide, die sich durch verbesserte thermoplastische Verarbeitbarkeit, gute Kochwasserbeständigkeit sowie niedrige Wasseraufnahme, hohe Hydrolysebeständigkeit, gute Dimensionsstabilität unter dem Einfluss von Feuchtigkeit und entsprechend verbesserte mechanische und elektrische Eigenschaften auszeichnen.

Die neuen erfindungsgemässen Polyamide haben eine reduzierte spezifische Viskosität (im folgenden auch reduzierte Lösungsviskosität genannt) von mindestens 0,3 dl/g, bevorzugt etwa 0,5 bis etwa 2,0 dl/g und insbesondere etwa 0,7 bis etwa 1,8 dl/g, gemessen an einer 0,5%igen Lösung in m-Kresol bei 25°C, und bestehen aus wiederkehrenden Strukturelementen der Formel I oder II

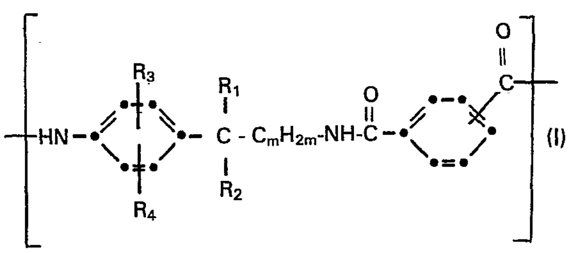
(I)

oder

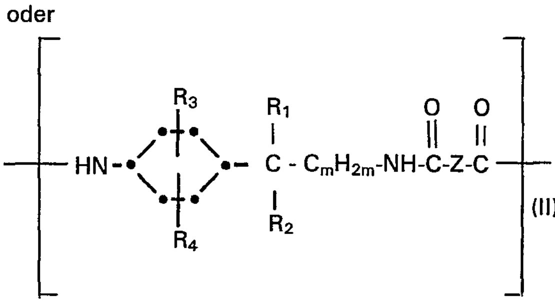
(II),

worin

m eine ganze Zahl von 4 bis 16,

$R_1$ $C_{1-3}$-Alkyl, $R_2$ $C_{1-6}$-Alkyl, $R_3$ und $R_4$ unabhängig voneinander Wasserstoff oder $C_{1-3}$-Alkyl und Z 1,3- und/oder 1,4-Phenylen darstellen, das in bis zu 50 Mol-%, bevorzugt bis zu 45 Mol-%, der Strukturelemente der Formel II durch Gruppen $-(CH_2)_n-$ ersetzt sein kann, worin n eine ganze Zahl von 4 bis 10 bedeutet und wobei die Carbonylgruppen in den Strukturelementen der Formel I in 1,3- und/oder 1,4-Stellung an den Benzolring gebunden sind.

Alkylgruppen $R_1$, $R_2$, $R_3$ und $R_4$ können geradkettig oder verzweigt sein. Beispiele von Alkylgruppen $R_1$, $R_3$ und $R_4$ sind: die Methyl-, Äthyl-, n-Propyl- und Isopropylgruppe, $R_2$ kann darüber hinaus weiters eine n-Butyl-, sek-Butyl-, n-Pentyl- und n-Hexylgruppe sein. $R_1$ ist bevorzugt Methyl oder Äthyl. Bevorzugte Gruppen $R_2$ sind Alkylgruppen mit 1-4 C-Atomen, besonders Methyl, Äthyl und Isopropyl. $R_3$ und $R_4$ stellen vorzugsweise Methyl und vor allem Wasserstoff dar.

Die Gruppen $-C_mH_{2m}-$ können ebenfalls geradkettig oder verzweigt sein, wobei die Verzweigung bevorzugt nicht vicinal zur Gruppe $-C(R_1)(R_2)-$ ist. Beispiele von Gruppen $-C_mH_{2m}-$ sind die Tetramethylen-, 4-Methyltetramethylen-, Pentamethylen-, 2,2-Dimethylpentamethylen-, Hexamethylen-, Heptamethylen-, Octamethylen-, Nonamethylen-, 9-Methylnonamethylen-, 9-Äthylnonamethylen-, 9-Isopropylnonamethylen-, 9-n-Butylnonamethylen-, 9-n-Hexylnonamethylen-, Decamethylen-, 10-Methyldecamethylen-, 10-Äthyldecamethylen-, 10-Isopropyldecamethylen-, 10-n-Butyldecamethylen-, 10-n-Hexyldecamethylen-, Undecamethylen-, Dodecamethylen-, Tridecamethylen-, Tetradecamethylen-, Pentadecamethylen- und Hexadecamethylengruppe. Bevorzugte Gruppen $-C_mH_{2m}-$ sind solche der Formeln $-(CH_2)_3-CH(CH_3)-$, $-(CH_2)_8-CH(R_5)-$ und $-(CH_2)_9-CH(R_5)-$, worin die -CH-Gruppe an das Stickstoffatom gebunden ist und $R_5$ geradkettiges oder verzweigtes $C_{1-6}$-Alkyl, bevorzugt Isopropyl, darstellt.

Bevorzugte Gruppen Z sind $-(CH_2)_4-$, die 1,3- und/oder 1,4-Phenylengruppe.

Bevorzugt sind Polyamide aus wiederkehrenden Strukturelementen der Formel I oder II, worin $R_1$ Methyl oder Äthyl, $R_2$ $C_{1-4}$-Alkyl, besonders Methyl, Äthyl oder Isopropyl, $R_3$ und $R_4$ unabhängig voneinander Methyl oder Wasserstoff, $-C_mH_{2m}-$, $-(CH_2)_3-CH(CH_3)-$, $-(CH_2)_8-CH(R_5)-$ oder $-(CH_2)_9-CH(R_5)-$ mit an das Stickstoffatom gebundener -CH-Gruppe, $R_5$ $C_{1-4}$-Alkyl, besonders Isopropyl und Z 1,3- oder 1,4-Phenylen darstellen, das in bis zu 45 Mol-% der Strukturelemente der Formel II durch $-(CH_2)_n-$ ersetzt sein kann, wobei n eine ganze Zahl von 4 bis 10 bedeutet und die Carbonylgruppen in den Strukturelementen der Formel I entweder 1,3- oder in 1,4-Stellung an den Benzolring gebunden sind.

Besonders bevorzugt sind Polyamide aus wiederkehrenden Strukturelementen der Formel I oder II, worin $R_1$ Methyl, $R_2$ Methyl oder Äthyl, $R_3$ und $R_4$ je Wasserstoff, $-C_mH_{2m}-$, $-(CH_2)_3-CH(CH_3)-$,

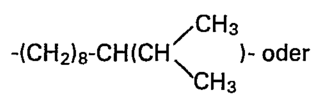
oder

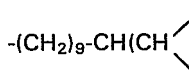 mit an das Stickstoffatom gebundener -CH-Gruppe, Z 1,3-Phenylen, 1,4-Phenylen oder 1,4-Phenylen darstellen, das in 15 bis 45 Mol-% der Strukturelemente der Formel II durch $-(CH_2)_4-$ ersetzt ist, wobei die Carbonylgruppen in den Strukturelementen der Formel I entweder in 1,3- oder in 1,4-Stellung an den Benzolring gebunden sind. In solchen Polyamiden ist Z besonders bevorzugt 1,3-Phenylen und ganz besonders bevorzugt 1,4-Phenylen.

Die erfindungsgemässen Polyamide können durch Schmelzkondensation

a) eines Diamins der Formel III

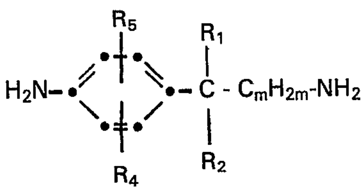

(III)

mit aktivierten Estern der Isophthal- und/oder Terepthtalsäure, oder

b) eines Diamins der Formel IV

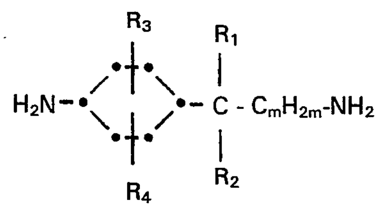

(IV)

mit aktivierten Estern der Isophthal- und/oder Terephthalsäure oder einem Gemisch aus aktivierten Estern der Iso- und/oder Terephthalsäure und bis zu 50 Mol-% eines aktivierten Esters einer Dicarbonsäure der Formel

$$HOOC-(CH_2)_n-COOH \quad (V)$$

hergestellt werden. In den obigen Formeln III bis V haben $R_1$ bis $R_4$, m und n die unter den Formeln I und II angegebene Bedeutung. Geeignete aktivierte Ester sind insbesondere die entsprechenden Diphenylester. Die Reaktionstemperaturen liegen im allgemeinen zwischen etwa 230 und 300°C. Die Reaktanden werden vorzugsweise in im wesentlichen stöchiometrischen Mengen eingesetzt. Dieses Verfahren eignet sich besonders zur Herstellung von Polyamiden, die aus wiederkehrenden Strukturelementen der Formel I bestehen.

Die erfindungsgemässen Polyamide können in an sich bekannter Weise auch durch Grenzflächenpolykondensation von Diaminen der Formel III oder IV mit Isophthalsäure- und/oder Terephthalsäurehalogeniden, gegebenenfalls im Gemisch mit bis zu 50 Mol-% Dihalogeniden von Dicarbonsäuren der Formel V, hergestellt werden. In diesem Verfahren werden bevorzugt die entsprechenden Dichloride verwendet.

Polyamide, die aus wiederkehrenden Strukturelementen der Formel II bestehen, werden bevorzugt durch Umsetzung eines Diamins der Formel IV mit Isophthalsäure und/oder Terephthalsäure oder amidbildenden Derivaten davon, oder einem Gemisch der genannten Isophthalsäure und/oder Terephthalsäure oder amidbildenden Derivaten davon und bis zu 50 Mol-% einer Dicarbonsäure der Formel V oder eines amidbildenden Derivats davon hergestellt.

Geeignete amidbildende Derivate der Isophthalsäure, Terephthalsäure oder von Dicarbonsäuren der Formel V sind z.B. die entsprechenden Dinitrile oder Dialkylester mit je 1-4 C-Atomen in den Alkylgruppen.

Bei diesem Verfahren wird die Schmelzpolykondensation in mehreren Stufen bevorzugt. In diesem Fall werden die Diamine der Formel IV mit im wesentlichen stöchiometrischen Mengen der definitionsgemässen Dicarbonsäuren in einem geschlossenen Gefäss, gegebenenfalls unter Zusatz von Wasser, unter einem Inertgas, wie Stickstoff, bei Temperaturen zwischen etwa 240 und 290°C vorkondensiert. Unter Umständen kann es von Vorteil sein, die Diamine und die Dicarbonsäuren in Form von Salzen einzusetzen. Die für die Vorkondensation zu verwendenden Salze werden aus im wesentlichen stöchiometrischen Mengen Isophthaisäure und/oder Terephthalsäure und gegebenenfalls bis zu 50 Mol-% einer Dicarbonsäure der Formel V und einem Diamin der Formel IV in einem geeigneten inerten organischen Lösungsmittel hergestellt. Geeignete inerte organische Lösungsmittel sind z.B. cycloaliphatische Alkohole, wie Cyclopentanol und Cyclohexanol, und vor allem aliphatische Alkohole mit bis zu 6 C-Atomen, wie Methanol, Äthanol, n-Propanol, Butanole, Pentanole und Hexanole, sowie Gemische derartiger Lösungsmittel mit Wasser. Das Vorkondensat kann anschliessend bei etwa 220 bis 300°C unter Normaldruck und vorzugsweise ebenfalls in Inertgasatmosphäre bis zur Bildung des Polyamids weiterkondensiert werden. Unter Umständen kann es vorteilhaft sein, nach Beendigung der Polykondensation zum Entgasen des Polyamids Vakuum anzulegen.

Den erfindungsgemässen Polyamiden können während der Herstellung oder bei der Formgebung übliche Zusätze zugegeben werden, wie Hitze- und Lichtstabilisatoren, Antioxidantien, Farbstoffe, Flammschutzmittel und dgl.

Die Diamine der Formeln III und IV sind neu. Diamine der Formel III können durch Umsetzung eines aromatischen Amins der Formel VI

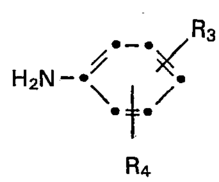

(VI),

worin $R_3$ und $R_4$ die oben angegebene Bedeutung haben und die p-Stellung zur Aminogruppe unsubstituiert ist, mit einem Alkylierungsmittel, das zur Einführung des Rests $-C(R_1)(R_2)-C_mH_{2m}-NH_2$ in para-Stellung zur Aminogruppe befähigt ist, erhalten werden, wobei die Umsetzung in saurem Medium und bei

erhöhten Temperaturen, z.B. bei Temperaturen zwischen 30 und 250°C, vorzugsweise zwischen 100 und 190°C, durchgeführt wird. Vorzugsweise wird die Umsetzung in Gegenwart eines Metallsalzes als Co-Katalysator und gegebenenfalls bei Überdruck vorgenommen. Geeignete Co-Katalysatoren sind z.B. Halogenide, Oxide, Hydroxide oder Carbonate der Metalle der Gruppen II, III oder VIII des Periodischen Systems. Bevorzugte derartige Metalle sind Mg, Cd, Zn, Al, Fe, Co und Ni.

Als Alkylierung zur Einführung des Rests $-C-(R_1)-(R_2)-C_mH_{2m}-NH_2$ werden Aminoalkohole und Diamine oder Salze davon bevorzugt.

Geeignete Säuren zur Durchführung der Alkylierungsreaktion sind Chlorwasserstoffsäure, Schwefelsäure, ortho-Phosphorsäure, alkyl-, aryl- oder alkaryl-substituierte anorganische Säuren, wie Methan- oder Äthansulfonsäuren, Benzolsulfonsäure und p-Toluolsulfonsäure. Methansulfonsäure, Dichloressigsäure, Trichloressigsäure, Trifluoressigsäure und Chlorwasserstoffsäure sind bevorzugt.

Nach Beendigung der Alkylierung können die Diamine der Formel III in üblicher Weise gereinigt und isoliert werden. Die so erhaltenen aromatischen Diamine der Formel III werden dann in Gegenwart eines Metallkatalysators oder eines gemischten Metallkatalysators und in Gegenwart eines unter den Reaktionsbedingungen gegenüber Wasserstoff inerten Lösungsmittels zu Diaminen der Formel IV hydriert. Geeignete Lösungsmittel für die Hydrierung sind z.B. Alkohole, Carbonsäuren oder wässrige anorganische Säuren. Essigsäure und Chlorwasserstoffsäure sind besonders geeignet. Als Hydrierungskatalysatoren eignen sich Metalle der Gruppe VIII des Periodischen Systems, z.B. Rh und Pt, oder Gemische davon. Bei Verwendung von tert-Butanol als Lösungsmittel werden $Rh/Al_2O_3$-Katalysatoren bevorzugt, während für die Hydrierung in Gegenwart von Chlorwasserstoff als Lösungsmittel ein Gemisch $Rh_2O_3$-$PtO_2$ (Nishimura-Katalysator) bevorzugt wird.

Die erfindungsgemässen Polyamide können in an sich bekannter Weise zu Formkörpern der verschiedensten Art verarbeitet werden. z.B. mittels Spritzguss- oder Extrusionsverfahren. Sie eignen sich vor allem zur Herstellung von transparenten Apparaturen oder Apparateteilen aus der Schmelze.

In den folgenden Beispielen bedeuten Teile Gewichtsteile, % Gewichtsprozent. Die Temperatur ist in °C angegeben.

*Beispiele*

*A) Herstellung von Diaminen der Formeln III und IV*

*Beispiel I*

Eine Lösung von 102 Teilen wasserfreiem Zinkchlorid in 153 Teilen 36%iger wässriger Chlorwasserstoffsäure und 200 Teilen Wasser wird mit 140 Teilen Anilin und 136 Teilen 6-Hydroxy-6-methyl-2-heptylamin-Hydrochlorid (Heptaminol-Hydrochlorid) versetzt. Das Gemisch wird in einen mit Tantal ausgekleideten 1-Liter-Autoklaven gegeben und während 24 Stunden bei 185° gerührt. Das Reaktionsgemisch wird aus dem Autoklaven entfernt und zu einer heissen Lösung von 750 Teilen Natriumhydroxid in 1500 Teilen Wasser gegeben und gerührt, bis sich das Gemisch abgekühlt hat. Die organische Phase wird mit Diäthyläther extrahiert, mit Wasser gewaschen, der Äther abgedampft und der Rückstand unter vermindertem Druck destilliert. Nach der Zurückgewinnung von 58 Teilen Anilin erhält man 135 Teile 2-Amino-6-(4-aminophenyl)-6-methylheptan; Sdp. 138-140°/0,65 mbar (82% d.Th., bezogen auf das Heptaminol).

*Beispiel II*

123 Teile Anilin und 84 Teile 3-Amino-2,2,12-trimethyl-tridecan-13-ol werden in einer Lösung von 166 Teilen 36%iger wässriger Chlorwasserstoffsäure, 89 Teilen wasserfreiem Zinkchlorid und 130 Teilen Wasser gelöst. Die Lösung wird dann bei 180° während 90 Stunden in einem mit Tantal ausgekleideten 1-Liter-Autoklaven gerührt. Das Reaktionsgemisch wird in 250 Teilen Natriumhydroxid und 500 Teile gegossen und dann wie in Beispiel I beschrieben aufgearbeitet. Nach der Destillation bei vermindertem Druck erhält man 85 Teile einer ersten Fraktion, die zur Hauptsache aus Anilin besteht. Dann erhält man ein Gemisch von 62 Teilen 3-Amino-12-(4-aminophenyl)-2,12-dimethyl-tetradecan und 3-Amino-13-(4-aminophenyl)-2,13-dimethyl-tetradecan; Sdp. 184-188° bei 0,1 mbar (57% d.Th., bezogen auf das Aminotridecanol).

*Beispiel III*

5,0 Teile 2-Amino-6-(4-aminophenyl)-6-methylheptan, gelöst in 68 Teilen 1N wässriger Chlorwasserstoffsäure werden bei Raumtemperatur (20-25°) und Normaldruck in Gegenwart von 0,5 Teilen Nishimura-Katalysator (Rhodium-Platin-Oxide) mit Wasserstoff geschüttelt. Die Wasserstoffaufnahme ist bei 105% d.Th. beendet. Der Katalysator wird abfiltriert, und die Lösung wird mit Natriumhydroxid behandelt. Man erhält ein Öl, das mit Diäthyläther isoliert wird. Nach Entfernen des Diäthyläthers wird der Rückstand destilliert. Mann erhält 4,0 Teile cis-/trans-2-Amino-6-(4-aminocyclohexyl)-6-methylheptan; Sdp. 120-129° bei 0,3 mbar.

*Beispiele IV und V*

In gleicher Weise, wie in Beispiel I beschrieben, wobei man anstelle von Anilin äquivalente Mengen von o-Toluidin bzw. 2-Äthylanilin verwendet und die folgenden Diamine erhält:

IV: 2-Amino-6-(4-amino-3-methylphenyl)-6-methyl-heptan.
Sdp. 192-196° bei 13 mbar.

Analyse in %:

| | | | |
|---|---|---|---|
| gef.: | C 76,87 | H 1,18 | N 11,95 |
| ber. für $C_{15}H_{26}N_2$ | C 76,56 | H 11,49 | N 12,25 |

V: 2-Amino-6-(4-amino-3-äthylphenyl)-6-methyl-heptan.
Sdp. 188-194° bei 13 mbar.

Analyse in %:

| | | | |
|---|---|---|---|
| gef.: | C 77,36 | H 11,78 | N 10,96 |
| ber. für $C_{16}H_{28}N_2$ | C 77,36 | H 11,36 | N 11,28 |

*Beispiel VI*

10 Teile 2-Amino-6-(4-amino-3,5-dimethylphenyl)-6-methyl-heptan, 90 Teile Eisessig, 8,2 Teile 36%ige Salzsäure und 1 Teil Nishimura-Katalysator werden zusammen in einer Glasdruckflasche bei 80° mit Wasserstoff unter einem Druck von 4 bar bis zur Aufnahme von 100% d.Th. an Wasserstoff während 1,25 Stunden geschüttelt. Nach Entfernung des Katalysators durch Filtration wird die Lösung auf 200 Teile Eis gegossen und ihr pH-Wert auf 13 eingestellt. Die organische Phase wird mit Äther extrahiert, der Äther abgedampft und der Rückstand destilliert. Nach einer ersten Fraktion von 1,5 Teilen folgen 5,4 Teile 2-Amino-6-(4-amino-3,5-dimethyl-cyclohexyl)-6-methyl-heptan mit einem Sdp. von 84 bis 87° bei 0,05 mbar.

Analyse in %:

| | | | |
|---|---|---|---|
| gef.: | C 75,2 | H 13,5 | N 10,9 |
| ber. für $C_{16}H_{34}N_2$ | C 75,52 | H 13,47 | N 11,01 |

*Beispiel VII*

2-Amino-6-(4-amino-3-methyl-cyclohexyl)-6-methyl-heptan mit dem Sdp. von 170-172° bei 16 mbar wird bei gleicher Weise, wie in Beispiel VI beschrieben, aus 2-Amino-6-(4-amino-3-methyl-phenyl)-6--methyl-heptan hergestellt.

Analyse in %:

| | | | |
|---|---|---|---|
| gef.: | C 75,03 | H 13,26 | N 11,33 |
| ber. für $C_{15}H_{32}N_2$ | C 74,93 | H 13,42 | N 11,65 |

*Beispiel VIII*

10 Teile 2-Amino-6-(4-amino-3-äthyl-phenyl)-6--methyl-heptan werden mit Wasserstoff bei Raumtemperatur und atmosphärischem Druck mit 1 Teil Nishimura-Katalysator in 120 Teilen 1N Salzsäure geschüttelt. Nach einer Aufnahme von 46% d.Th. von Wasserstoff, was nach 18 Stunden der Fall ist, wird nochmals 1 Teil des Katalysators zugegeben, worauf nach 15 Stunden weiter Wasserstoff bis 96% d.Th. aufgenommen wird. Hierauf wird nach Zugabe eines weiteren Teils Katalysator die Hydrierung während 24 Stunden fortgesetzt, wobei 110% d.Th. an Wasserstoff aufgenommen ist. Man arbeitet das Produkt wie in Beispiel VI beschrieben auf und erhält 8,8 Teile 2-Amino-6-(4-amino-3-äthyl-cyclohexyl)-6-methyl-heptan mit einem Sdp. von 178 bis 180° bei 12 mbar.

Analyse in %:

| | | | |
|---|---|---|---|
| gef.: | C 75,38 | H 13,74 | N 11,11 |
| ber. für $C_{16}H_{34}N_2$ | C 75,52 | H 13,47 | N 11,01 |

*B) Herstellung von Polyamiden*

*Beispiel 1*

19,36 g (0,0878 Mol) 2-Amino-6-(4-aminophenyl)-6-methyl-heptan und 27,97 g (0,0878 Mol) Isophthalsäurediphenylester werden in einen mit Rückflusskühler und Gaseinleitungsrohr versehenen 200-ml-Rundkolben eingewogen. Nachdem die Luft im Kolben mit Stickstoff vollständig verdrängt worden ist, wird der Kolben in ein 210° warmes Salzbad eingetaucht. Der Kolben wird unter Durchleiten eines schwachen Stickstoffstroms 3 Stunden bei dieser Temperatur gehalten. Dann wird der Rückflusskühler durch eine Destillationsbrücke mit Vorlage ersetzt, und die Temperatur wird im Verlaufe einer Stunde auf 270° gesteigert. Dabei destilliert der grösste Teil des abgespaltenen Phenols in die Vorlage über. Anschliessend wird Wasserstrahlpumpenvakuum (etwa 20 mbar) angelegt, und das restliche Phenol wird im Verlaufe von 3 Stunden bei 270° abdestilliert. Man erhält eine viskose Polyamidschmelze, welche beim Abkühlen zu einer gelblichen durchsichtigen Masse erstarrt. 2-3 g des so hergestellten Polyamids werden mittels einer beheizbaren hydraulischen Presse zu einer Folie von ca. 0,3 bis 0,5 mm Dicke verpresst. Zur Bestimmung der Wasseraufnahme wird die Folie bei Raumtemperatur einer relativen Luftfeuchtigkeit von 65% ausgesetzt, bis keine Gewichtszunahme mehr festgestellt werden kann. Die reduzierte Lösungsviskosität des erhaltenen Polyamids wird an einer 0,5%igen Lösung in m-Kresol bei 25° gemessen. Die Glasumwandlungstemperatur Tg wird im Differentialkalorimeter (DSC) bestimmt. Die Resultate sind in Tabelle 1 zusammengefasst.

*Beispiele 2-4*

Auf analoge Weise wie in Beispiel 1 beschrieben werden äquimolare Mengen der folgenden Reaktanten zu transparenten Polyamiden polykondensiert:

Beispiel 2 2-Amino-6-(4-aminophenyl)-6-methyl--heptan und Terephthalsäurediphenylester;

Beispiel 3 3-Amino-12-(4-aminophenyl)-2,12-dimethyl-tetradecan und 3-Amino-13-(4-aminophenyl(-2,13-dimethyl-tetradecan Terephthalsäurediphenylester;

Beispiel 4 3-Amino-12-(4-aminophenyl)-2,12-dimethyl-tetradecan und 3-Amino-13-(4-aminophenyl)-2,13-dimethyl-tetradecan Isophthalsäurediphenylester.

Die Eigenschaften der so erhaltenen Polyamide werden wie in Beispiel 1 beschrieben geprüft. Die Ergebnisse sind in Tabelle 1 zusammengefasst.

*Beispiel 5*

5,66 g (0,025 Mol) 2-Amino-6-(4-amino-cyclohexyl)-6-methyl-heptan und 4,155 g (0,025 Mol) Isophthalsäure werden in ein Bombenrohr, das mit Schraubendeckel und eingebautem Überdruckventil versehen ist, eingewogen. Nachdem man die Luft im Bombenrohr vollständig durch Stickstoff verdrängt hat, verschliesst man das Bombenrohr und taucht es in ein Salzbad von 270° ein. Nach kurzer Zeit ist eine klare Schmelze entstanden. Nach 2 Stunden wird die Reaktion abgebrochen, indem man das Rohr aus dem Salzbad entfernt und den Überdruck durch Öffnen des Ventils ablässt. Das erstarrte Vorkondensat wird aus dem Bombenrohr entfernt und in ein Kondensationsgefäss übergeführt. Unter strengem Ausschluss von Luft und dauerndem Durchleiten von Stickstoff bei einer Temperatur von 280° wird die wieder aufgeschmolzene Masse polykondensiert, wobei das gebildete Wasser durch den Stickstoffstrom laufend entfernt wird. Nach 5 Stunden wird die Polykondensation abgebrochen. Beim Abkühlen erstarrt die Schmelze zu einer glasklaren, farblosen

Masse. Die Eigenschaften des erhaltenen Polyamids werden wie in Beispiel 1 beschrieben bestimmt. Die Ergebnisse sind in Tabelle 1 zusammengefasst.

*Beispiele 6-9*

Nach der in Beispiel 5 beschriebenen Arbeitsweise werden äquimolare Mengen der folgenden Reaktanten polykondensiert:

Beispiel 6 2-Amino-6-(4-amino-cyclohexyl)-6-methyl-heptan und Terephthalsäure;

Beispiel 7 2-Amino-6-(4-amino-cyclohexyl)-6-methyl-heptan und Terephthalsäure/Adipinsäure in einem Mol-Verhältnis von 70:30;

Beispiel 8 2-Amino-6-(4-amino-cyclohexyl)-6-methyl-heptan und Terephthalsäure/Adipinsäure in einem Mol-Verhältnis von 85:15;

Beispiel 9 2-Amino-6-(4-amino-cyclohexyl)-6-methyl-heptan und Terephthalsäure/Adipinsäure in einem Mol-Verhältnis von 55:45.

Die Eigenschaften der so erhaltenen Polyamide werden wie in Beispiel 1 beschrieben bestimmt. Die Ergebnisse sind in Tabelle 1 zusammengefasst.

*Beispiele 10 und 11*

In gleicher Weise, wie in Beispiel 1 beschrieben, werden äquimolare Mengen der folgenden Reaktanten zu transparenten Polyamiden polykondensiert:

Beispiel 10 2-Amino-6-(3-methyl-4-amino-phenyl)-6-methyl-heptan und Terephthalsäurediphenylester;

Beispiel 11 2-Amino-6-(3-äthyl-4-amino-phenyl)-6-methyl-heptan und Terephthalsäurediphenylester.

*Beispiele 12-17*

Wie in Beispiel 5 beschrieben, werden äquimolare Mengen der Reaktanten zu transparenten Polyamiden polykondensiert:

Beispiel 12 2-Amino-6-(3,5-dimethyl-4-amino-cyclohexyl)-6-methyl-heptan und Terephthalsäure;

Beispiel 13 2-Amino-6-(3,5-dimethyl-4-amino-cyclohexyl)-6-methyl-heptan und Isophthalsäure;

Beispiel 14 2-Amino-6-(3-methyl-4-amino-cyclohexyl)-6-methyl-heptan und Terephthalsäure;

Beispiel 15 2-Amino-6-(3-methyl-4-amino-cyclohexyl)-6-methyl-heptan und Isophthalsäure;

Beispiel 16 2-Amino-6-(3-äthyl-4-amino-cyclohexyl)-6-methyl-heptan und Terephthalsäure;

Beispiel 17 2-Amino-6-(3-äthyl-4-amino-cyclohexyl)-6-methyl-heptan und Isophthalsäure.

Die Eigenschaften der so erhaltenen Polyamide werden wie in Beispiel 1 bestimmt. Die Ergebnisse sind in Tabelle 1 zusammengefasst:

Tabelle I

| Beispiel Nr. | reduzierte Lösungsviskosität $\eta_{red}$ dl/g | Glasumwandlungstemperatur Tg °C | Wasseraufnahme 65% rel. Luftfeuchtigkeit Gew.-% |
|---|---|---|---|
| 1 | 0,51 | 159 | 2-3 |
| 2 | 0,38 | 172 | 2-3 |
| 3 | 0,57 | 152 | 1-2 |
| 4 | 0,44 | 135 | 1-2 |
| 5 | 1,39 | 174 | 2-3 |
| 6 | 1,62 | 189 | 2-3 |
| 7 | 0,79 | 155 | 2-3 |
| 8 | 0,78 | 163 | 2-3 |
| 9 | 0,76 | 145 | 2-3 |
| 10 | 0,52 | 170 | 1,8 |
| 11 | 0,40 | 160 | 1,8 |
| 12 | 0,62 | 193 | 1,8 |
| 13 | 0,50 | 178 | 2,0 |
| 14 | 0,50 | 183 | 2,1 |
| 15 | 0,42 | 163 | 2,2 |
| 16 | 0,52 | 178 | 1,8 |
| 17 | 0,41 | 165 | 1,9 |

**Patentansprüche**

1. Transparente Polyamide mit einer reduzierten spezifischen Viskosität von mindestens 0,3 dl/g, gemessen an einer 0,5%igen Lösung in m-Kresol bei 25°C, die aus wiederkehrenden Strukturelementen der Formel I oder II

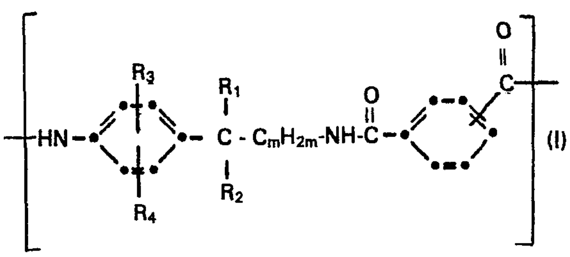

(I)

oder

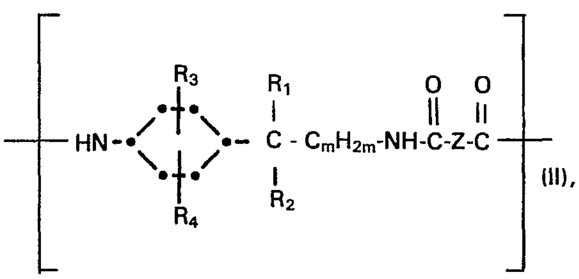

(II),

bestehen, worin

m eine ganze Zahl von 4 bis 16,

$R_1$ $C_{1-3}$-Alkyl, $R_2$ $C_{1-6}$-Alkyl, $R_3$ und $R_4$ unabhängig voneinander Wasserstoff oder $C_{1-3}$-Alkyl und Z 1,3- und/oder 1,4-Phenylen darstellen, das in bis zu 50 Mol-% der Strukturelemente der Formel II durch Gruppen $-(CH_2)_n-$, worin n eine ganze Zahl von 4 bis 10 ist, ersetzt sein kann und wobei die Carbonylgruppen in den Strukturelementen der Formel I in 1,3- und/oder 1,4-Stellung an den Benzolring gebunden sind.

2. Polyamide nach Anspruch 1 aus wiederkehrenden Strukturelementen der Formel I oder II, worin $R_1$ Methyl oder Äthyl, $R_2$ $C_{1-4}$-Alkyl, $R_3$ und $R_4$ unabhängig voneinander Methyl oder Wasserstoff, $-C_mH_{2m}-$, $-(CH_2)_3-CH(CH_3)-$, $-(CH_2)_8-CH(R_5)-$ oder, $-(CH_2)_9-CH(R_5)-$ mit an das Stickstoffatom gebundener -CH-Gruppe, $R_5$ $C_{1-4}$-Alkyl und Z 1,3- oder 1,4-Phenylen bedeuten, das in bis zu 45 Mol-% der wiederkehrenden Strukturelemente der Formel II durch $-(CH_2)_n-$ ersetzt sein kann, worin n eine ganze Zahl von 4 bis 10 darstellt, und wobei die Carbonylgruppen in den Strukturelementen der Formel I entweder in 1,3- oder in 1,4-Stellung an den Benzolring gebunden sind.

3. Polyamide nach Anspruch 1 aus wiederkehrenden Strukturelementen der Formel I oder II, worin $R_1$ Methyl, $R_2$ Methyl oder Äthyl, $R_3$ und $R_4$ je Wasserstoff, $-C_mH_{2m}-$, $-(CH_2)_3-CH(CH_3)-$,

$-(CH_2)_8-CH(CH\genfrac{}{}{0pt}{}{CH_3}{CH_3})-$ oder

$-(CH_2)_9-CH(CH\genfrac{}{}{0pt}{}{CH_3}{CH_3})-$ mit an das Stickstoffatom gebundener -CH-Gruppe und Z 1,3-Phenylen, 1,4-Phenylen oder 1,4-Phenylen, das in 15 bis 45 Mol-% der Strukturelemente der Formel II durch $-(CH_2)_4-$ ersetzt ist, darstellen, wobei die Carbonylgruppen in den Strukturelementen der Formel I entweder in 1,3- oder in 1,4-Stellung an den Benzolring gebunden sind.

4. Polyamide nach Anspruch 3, die aus wiederkehrenden Strukturelementen der Formel II bestehen, worin Z 1,3-Phenylen und besonders 1,4-Phenylen ist.

5. Verfahren zur Herstellung von transparenten Polyamiden aus wiederkehrenden Strukturelementen der Formel I oder II nach Anspruch 1, dadurch gekennzeichnet, dass man

a) ein Diamin der Formel III

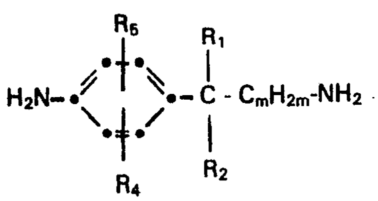 (III)

in der Schmelze mit einem aktivierten Ester der Isophthalsäure und/oder Terephthalsäure polykondensiert oder

b) ein Diamin der Formel IV

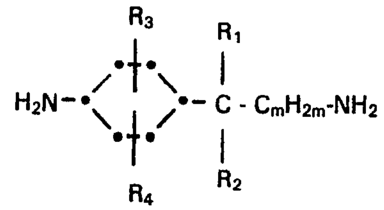 (IV)

in der Schmelze mit einem aktivierten Ester der Isophthalsäure und/oder Terephthalsäure oder einem Gemisch der genannten aktivierten Ester der Isophthalsäure und/oder Terephthalsäure und bis zu 50 Mol-% eines aktivierten Esters eines Dicarbonsäure der Formel V

$$HOOC-(CH_2)_n-COOH \quad (V)$$

polykondensiert, worin $R_1$ bis $R_4$, m und n die in Anspruch 1 angegebene Bedeutung haben.

6. Verfahren zur Herstellung von transparenten Polyamiden aus wiederkehrenden Strukturelementen der Formel II nach Anspruch 1, dadurch gekennzeichnet, dass man ein Diamin der Formel IV

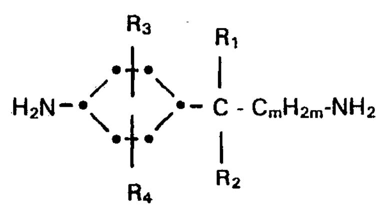 (IV)

mit Isophthalsäure und/oder Terephthalsäure oder amidbildenden Derivaten davon oder einem Gemisch aus Isophthalsäure und/oder Terephthalsäure oder amidbildenden Derivaten davon und bis zu 50 Mol-% einer Dicarbonsäure der Formel V

$$HOOC-(CH_2)_n-COOH \quad (V)$$

oder amidbildenden Derivaten davon umsetzt, wobei $R_1$ bis $R_4$, m und n die in Anspruch 1 angegebene Bedeutung haben.

7. Verwendung der Polyamide gemäss Anspruch 1 zur Herstellung von Formkörpern.

**Claims**

1. A transparent polyamide having a reduced specific viscosity of at least 0.3 dl/g, measured in a 0.5% solution in m-cresol at 25 °C, and consisting of recurring structural elements of formula I or II

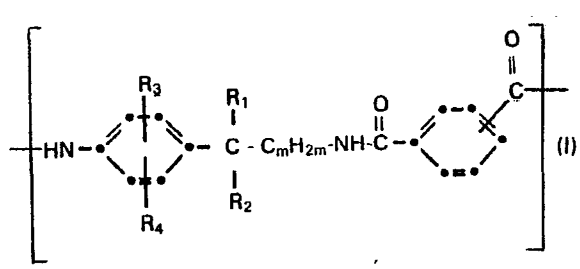 (I)

or

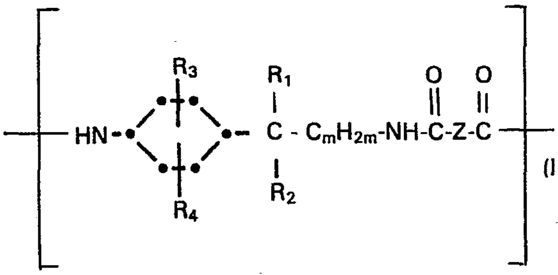

(II),

wherein

m is an integer from 4 to 16,

$R_1$ is $C_{1-3}$ alkyl,

$R_2$ is $C_{1-6}$ alkyl,

$R_3$ and $R_4$ independently of each other are hydrogen or $C_{1-3}$ alkyl and

Z is 1,3- and/or 1,4-phenylene which, in up to 50 mole % of the structural elements of formula II may be replaced by groups $-(CH_2)-$, wherein n is an integer from 4 to 10 and whereby the carbonyl groups in the structural elements of formula I are linked to the benzene ring in the 1,3- and/or 1,4-position.

2. A polyamide as claimed in claim 1 consisting of recurring structural elements of formula I or II, wherein $R_1$ is methyl or ethyl, $R_2$ is $C_{1-4}$ alkyl, $R_3$ and $R_4$ independently of one another are methyl or hydrogen, $-C_mH_{2m}-$ is $-(CH_2)_3-CH(CH_3)-$, $-(CH_2)_8-CH(R_5)-$ or $-(CH_2)_9-CH(R_5)-$, wherein the group -CH- is linked to the nitrogen atom and $R_5$ is $C_{1-4}$ alkyl, and Z is 1,3- or 1,4-phenylene which, in up to 45 mole % of the recurring structural elements of formula II may be replaced by $-(CH_2)_n-$, wherein n is an integer from 4 to 10, the carbonyl groups in the structural elements of formula I being linked to the benzene ring either in the 1,3- or 1,4-position.

3. A polyamide as claimed in claim 1 consisting of recurring structural elements of formula I or II, wherein $R_1$ is methyl, $R_2$ is methyl or ethyl, $R_3$ and $R_4$ are each hydrogen, $-C_mH_{2m}-$ is $-(CH_2)_3-CH(CH_3)-$ or

$-(CH_2)_8-CH(CH{<}^{CH_3}_{CH_3})-$ or $-(CH_2)_9-CH(CH{<}^{CH_3}_{CH_3})-$,

wherein the group -CH- is linked to the nitrogen atom and Z is 1,3-phenylene, 1,4-phenylene or 1,4-phenylene which, in 15 to 45 mole % of the structural elements of formula II is replaced by $-(CH_2)_4-$, the carbonyl groups in the structural elements of formula I being linked to the benzene ring either in the 1,3- or 1,4-position.

4. A polyamide as claimed in claim 3 consisting of recurring structural elements of formula II, wherein Z is 1,3-phenylene and especially 1,4-phenylene.

5. A process for the preparing of a transparent polyamide consisting of recurring structural elements of formula I or II as claimed in claim 1, which process comprises

a) polycondensing a diamine of formula III

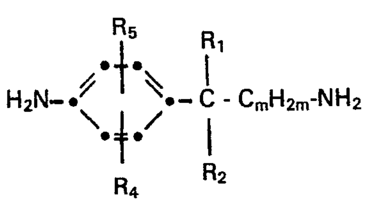

(III)

in the melt with an activated ester of isophthalic and/or terephthalic acid, or

b) polycondensing a diamine of formula IV

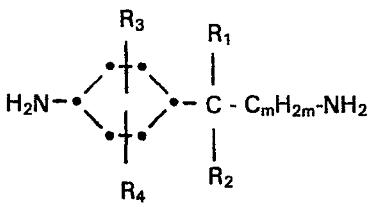

(IV)

in the melt with an activated ester of isophthalic and/or terephthalic acid, or a mixture of said activated esters of isophthalic and/or terephthalic acid and up to 50 mole % of an activated ester of a dicarboxylic acid of formula V

$$HOOC-(CH_2)_n-COOH \quad (V)$$

wherein $R_1$ to $R_4$, m and n have the meanings given in claim 1.

6. A process for the preparation of a transparent polyamide consisting of recurring structural elements of formula II as claimed in claim 1, which process comprises reacting a diamine of formula IV

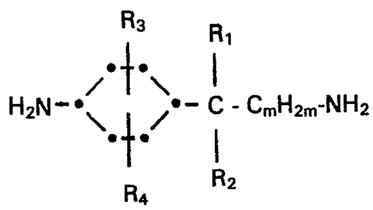

(IV)

with isophthalic acid and/or terephthalic acid or amide-forming derivatives thereof, or a mixture of isophthalic and/or terephthalic acid or amide-forming derivatives thereof with up to 50 mole % of a dicarboxylic acid of formula V

$$HOOC-(CH_2)_n-COOH \quad (V)$$

or an amide-forming derivatives thereof, wherein $R_1$ to $R_4$, m and n have the meanings given in claim 1.

7. Use of a polyamide as claimed in claim 1 for the preparation of shaped articles.

**Revendications**

1. Polyamides transparents ayant une viscosité réduite d'au moins 0,3 dl/g, mesurée à 25°C sur une solution à 0,5% dans le m-crésol, polyamides qui sont constitués d'éléments structuraux répondant à l'une des formules (I) et (II):

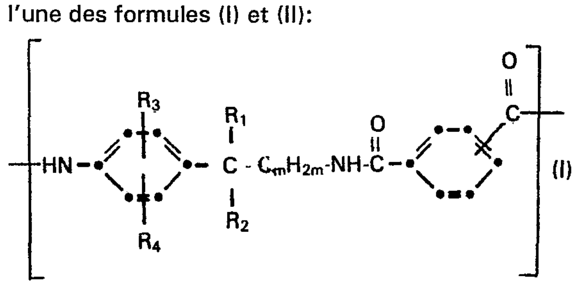

(I)

ou

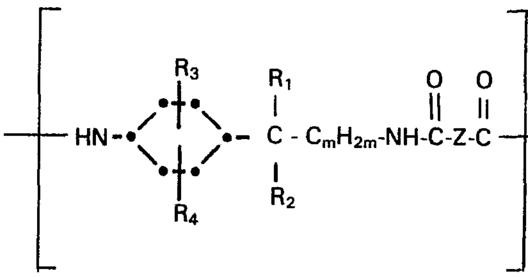

(II),

dans lesquelles:

m représente un nombre entier de 4 à 16,

$R_1$ représente un alkyle en $C_1$-$C_3$,

$R_2$ représente un alkyle en $C_1$-$C_6$,

$R_3$ et $R_4$ représentent chacun, indépendamment l'un de l'autre, l'hydrogène ou un alkyle en $C_1$-$C_3$ et

Z représente un radical phénylène-1,3 et/ou -1,4 qui peut être remplacé, dans au plus 50% en moles des motifs de formule (II), par des radicaux $-(CH_2)_n-$ dans lesquels n représente un nombre entier de 4 à 10,

les radicaux carbonyles, dans les motifs de formule (I), étant en méta et/ou en para l'un par rapport à l'autre sur le noyau benzénique.

2. Polyamides selon la revendication 1 qui sont constitués d'éléments structuraux répétés de formule (I) ou (II) dans lesquels $R_1$ représente un radical méthyle ou éthyle, $R_2$ un radical alkyle en $C_1$-$C_4$, $R_3$ et $R_4$ représentent chacun, indépendamment l'un de l'autre, un radical méthyle ou l'hydrogène, $-C_mH_{2m}$ représente un radical $-(CH_2)_3-CH(CH_3)-$, $-(CH_2)_8-CH(R_5)-$ ou $-(CH_2)_9-CH(R_5)-$ qui est relié à l'atome d'azote par son radical -CH-, $R_5$ représente un alkyle en $C_1$-$C_4$ et Z représente un radical phénylène-1,3 ou -1,4 qui peut être remplacé, dans au plus 45% en moles des éléments structuraux répétés de formule (II), par des radicaux $-(CH_2)_n-$ dont l'indice n désigne un nombre entier de 4 à 10, les radicaux carbonyles, dans les éléments structuraux de formule (I), étant en position 1,3 ou en position 1,4 sur le noyau benzénique.

3. Polyamides selon la revendication 1 constitués d'éléments structuraux répétés de formule (I) ou (II) dans lesquels $R_1$ représente un méthyle, $R_2$ un méthyle ou un éthyle, $R_3$ et $R_4$ représentent chacun l'hydrogène, $-C_mH_{2m}-$ représente un radical $-(CH_2)_3-$ $-CH(CH_3)-$, 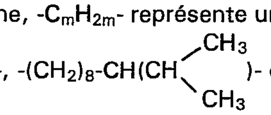 ou 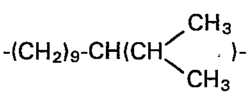 - qui est relié à l'atome d'azote par son radical -CH-, et Z représente un radical phénylène-1,3, un radical phénylène-1,4 ou un radical phénylène-1,4 qui est remplacé, dans 15 à 45% en moles des éléments structuraux de formule (II), par un radical $-(CH_2)_4-$, les radicauc carbonyles, dans les éléments structuraux de formule (I), se trouvant en position 1,3 ou en position 1,4 sur le noyau benzénique.

4. Polyamides selon la revendication 3 qui sont constitués d'éléments structuraux répétés de formule (II) dans lesquels Z représente un radical phénylène-1,3 ou, plus particulièrement, un radical phénylène-1,4.

5. Procédé de préparation de polyamides transparents constitués d'éléments structuraux répétés de formule (I) ou (II) selon la revendication 1, procédé caractérisé en ce que:

a) on polycondense une diamine de formule (III):

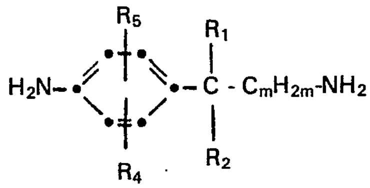

(III)

à l'état fondu, avec un ester activé de l'acide isophtalique et/ou de l'acide téréphtalique, ou

b) on polycondense une diamine de formule (IV):

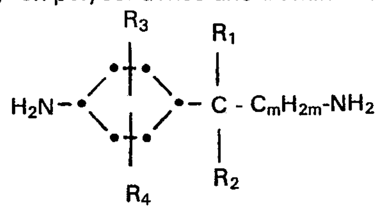

(IV)

à l'état fondu, avec un ester activé de l'acide isophtalique et/ou de l'acide téréphtalique, ou avec un mélange de ces esters activés de l'acide isophtalique et/ou téréphtalique et, en une proportion d'au plus 50% en moles, d'un ester active d'un acide dicarboxylique de formule (V):

$$HOOC-(CH_2)_n-COOH \quad (V)$$

les symboles $R_1$ à $R_4$, m et n ayant, dans les formules précédentes, les significations qui ont été données à la revendication 1.

6. Procédé de préparation de polyamides transparents, constitués d'éléments structuraux répétés de formule (II) selon la revendication 1, procédé caractérisé en ce qu'on fait réagir une diamine de formule (IV):

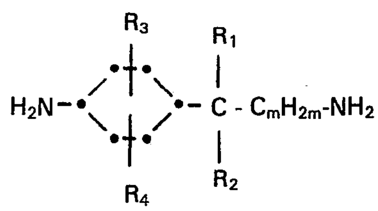

(IV)

avec l'acide isophtalique et/ou l'acide téréphtalique ou des dérivés de ces acides aptes à former des amides, ou avec un mélange d'acide isophtalique et/ou d'acide téréphtalique ou de leurs dérivés amidogènes et, en une proportion d'au plus 50% en moles, d'un acide dicarboxylique de formule (V):

$$HOOC-(CH_2)_n-COOH \quad (V)$$

ou de dérivés amidogènes de cet acide, les symboles $R_1$ à $R_4$, m et n ayant, dans les formules précédentes, les significations qui ont été données à la revendication 1.

7. Application des polyamides selon la revendication 1 à la fabrication d'objets moulés.